# EUROPÄISCHE PATENTSCHRIFT

(11) **EP 3 243 310 B1**
(45) Veröffentlichungstag und Bekanntmachung des Hinweises auf die Patenterteilung: **08.01.2020**
(21) Anmeldenummer: 15816467.3
(22) Anmeldetag: 21.12.2015
(51) Int. Cl.: G06F 21/33, F03D 7/04, H04L 29/06, H04L 9/32

(54) **VERFAHREN ZUM AUTORISIEREN FÜR STEUERZUGRIFFE AUF WINDENERGIEANLAGEN SOWIE SCHNITTSTELLE VON WINDENERGIEANLAGEN UND ZERTIFIZIERUNGSSTELLE**
METHOD OF AUTHORIZATION FOR CONTROL ACCESS TO WIND POWER INSTALLATIONS, AND ALSO INTERFACE FOR WIND POWER INSTALLATIONS AND CERTIFICATION CENTRE
PROCÉDÉ D'AUTORISATION D'ACCÈS AUX COMMANDES D'ÉOLIENNES ET INTERFACE D'ÉOLIENNES ET CENTRE DE CERTIFICATION

(30) Priorität: 09.01.2015 DE 102015200209
(43) Veröffentlichungstag der Anmeldung: 15.11.2017
(73) Patentinhaber: Wobben Properties GmbH, 26607 Aurich (DE)
(72) Erfinder: JAKOBS, Thorsten, 26529 Leezdorf (DE); DEMUTH, Simon, 26524 Hage (DE); GIERTZ, Helge, 26789 Leer (DE)
(74) Vertreter: Eisenführ Speiser
(86) Internationale Anmeldenummer: PCT/EP2015/080736
(87) Internationale Veröffentlichungsnummer: WO 2016/110405

(56) Entgegenhaltungen:
- WO-A2-2009/131656
- GB-A- 2 487 049
- JP-A- 2011 524 559

## Beschreibung

Die Erfindung betrifft ein Verfahren zum Autorisieren von Benutzern für Steuerzugriffe auf mindestens eine Windenergieanlage oder mindestens einen Windpark sowie eine Schnittstelle für mindestens eine Windenergieanlage oder mindestens einen Windpark, eine Zertifizierungsstelle und ein System mit einer Schnittstelle für mindestens eine Windenergieanlage oder mindestens einen Windpark und einer Zertifizierungsstelle.

Gemäß dem Stand der Technik sind Steuer- und Lesezugriffe auf eine Windenergieanlage oder mehrere Windenergieanlagen, die als Windpark organisiert sind, möglich. Steuerund Lesezugriffe auf Windparks werden z. B. durch Lese- und Steuerzugriffe auf einen Windparkregler realisiert. Bei einem Lesezugriff kann ein Benutzer z. B. aktuelle Betriebsdaten, wie die zurzeit in das Versorgungsnetz eingespeiste Energie, auslesen. Lesezugriffe sind somit alle Zugriffe, bei denen nicht in den Betrieb der Windenergieanlage eingegriffen wird, also insbesondere nicht auf Betriebsparameter durch den Benutzer eingegriffen wird.

Bei einem Steuerzugriff wird gegenüber einem Lesezugriff direkt oder indirekt auf den Betrieb der Windenergieanlage oder den Windpark eingewirkt, indem z. B. Betriebsparameter verändert werden. Betriebsparameter sind z.B. Regelgrößen und dgl. Durch einen Steuerzugriff lassen sich beispielsweise auch ein oder mehrere Windenergieanlagen anoder abschalten oder es kann die Energiemenge sowie die Spannung oder Frequenz der Energie, die in ein Versorgungsnetz eingespeist wird, variiert werden.

Gemäß dem Stand der Technik erfolgt eine Authentisierung eines Benutzers gegenüber einer Windenergieanlage oder einem Windpark durch Übergabe eines Tupels von Passwort und Benutzerkennung, sodass sich der Benutzer gegenüber dem Windpark im Bezug auf seine Identität identifizieren kann. Durch die Übergabe an die Windenergieanlage bzw. den Windpark werden dem Benutzer dann Steuer- und/oder Lesezugriffe erlaubt, wobei die Zugriffsart, also die Lesezugriffsart oder die Steuerzugriffsart, unterschiedlicher Benutzer durch die entsprechende Windenergieanlage bzw. den Windpark unterschiedlich beschränkt sein können. Derartige Beschränkungen sind im Windpark bzw. der Windenergieanlage zusammen mit der Benutzerkennung und dem Passwort hinterlegt.

Jedenfalls hat zumindest ein Benutzer die Berechtigung, auch systemkritische Steuerzugriffsarten, zu denen z. B. das Ein- und Abschalten der Windenergieanlage bzw. des Windparks zählen, auszuführen. Somit ist bei Kenntnis der Zugangsdaten dieses Benutzers, nämlich des Tupels aus Benutzernamen und Passwort, der Zugriff kritischer Steuerzugriffsarten auf die Windenergieanlage oder den Windpark möglich.

Gemäß einem Bedrohungsszenario durch menschliches Fehlverhalten und Sabotage durch Innentäter ist es demnach möglich, bei Kenntnis der Zugangsdaten für mehrere Windparks in einer Region diese Windparks abzuschalten. Demnach könnte in dieser Region ein Energienetz bzw. Versorgungsnetz komplett ausfallen, da durch ein gleichzeitiges Abschalten mehrerer Windparks mehr Energie von Verbrauchern angefordert wird als von den Energiequellen zur Verfügung steht. Daher ist es Aufgabe der vorliegenden Erfindung, Maßnahmen zu treffen, die Steuerzugriffe und insbesondere kritische Steuerzugriffe auf Windenergieanlagen und Windparks sicherer zu gestalten.

Das Deutsche Patent- und Markenamt hat in der Prioritätsanmeldung zu vorliegender Anmeldung folgenden Stand der Technik recherchiert: DE 102010 044 517 A1, EP 1 598 729 A2, WO 2011/015414 A1. Außerdem zeigt GB 2487049 A die Möglichkeit, mittels eines zuvor ausgegebenen Zertifikats eine Autorisierung eines Benutzers bei einer Windenergieanlage oder einem Windpark durchzuführen.

Die vorliegende Erfindung löst diese Aufgabe durch ein Verfahren zum Autorisieren von Benutzern für Steuerzugriffe auf mindestens eine Windenergieanlage oder mindestens einen Windpark nach Anspruch 1, eine Zertifizierungsstelle nach Anspruch 7 sowie ein System mit mindestens einer Schnittstelle mindestens einer Windenergieanlage oder mindestens eines Windparks und einer Zertifizierungsstelle nach Anspruch 9.

Gemäß der Erfindung werden zum Autorisieren von Benutzern für Steuerzugriffe auf mindestens eine Windenergieanlage, also eine oder mehrere Windenergieanlagen oder auch einen oder mehrere Windparks, die bzw. die jeweils aus einem Verbund von Windenergieanlagen gebildet sind, folgende Schritte ausgeführt.

Zunächst wird ein Benutzer, der sich gegenüber einer Zertifizierungsstelle authentisiert, von der Zertifizierungsstelle authentifiziert. Demnach übergibt ein Benutzer zur Authentisierung z. B. ein Tupel aus Passwort und Benutzernamen, Passwort und Benutzerkennung, ein elektronisches Zertifikat, einer Kombination aus Passwort, Benutzernamen und Zertifikat oder dergleichen an eine Zertifizierungsstelle, wobei hierdurch die eigene Identität des Benutzers nachgewiesen wird. Bei korrekten Zugangsdaten, also korrektem Benutzernamen und Passwort und/oder korrektem Zertifikat wird der Benutzer dann von der Zertifizierungsstelle authentifiziert, also eine Zugangsberechtigung bestätigt. Demnach wird der Benutzer also mit der bzw. bei der Zertifizierungsstelle von der Zertifizierungsstelle authentifiziert.

Im nächsten Schritt übernimmt die Zertifizierungsstelle eine oder mehrere Steuerzugriffsarten vom authentifizierten Benutzer, wobei diese insbesondere vom Benutzer z. B. mittels Eingabemitteln und/oder einer graphischen Benutzeroberfläche an die Zertifizierungsstelle übergeben werden.

Steuerzugriffsarten bezeichnen hier unterschiedliche Typen eines Steuerzugriffs, wobei ein Steuerzugriff alle Zugriffe bezeichnet, durch die auf Funktionen und den Betrieb eingewirkt werden kann, sodass hieraus Einwirkungen auf laufende und zukünftige Betriebszustände der Windenergieanlage bzw. des Windparks möglich sind. Eine Steuerzugriffsart beschreibt also einen von mehreren möglichen Steuerzugriffen, wie z. B. eine Parametrierung, das An- und/oder Abschalten einer, mehrerer oder aller Windenergieanlagen, usw.

Demnach übergibt der Benutzer also eine oder mehrere Steuerzugriffsarten an die Zertifizierungsstelle, wobei der Benutzer insbesondere die Steuerzugriffsart oder Steuerzugriffsarten übergibt, mit denen später auf eine Windenergieanlage oder einer Windpark zugegriffen werden soll.

Ist die Steuerzugriffsart durch die Zertifizierungsstelle vom authentifizierten Benutzer übernommen, so wird ein digitales Zertifikat mit der Zertifizierungsstelle in Abhängigkeit der übernommenen Steuerzugriffsart und/oder hinterlegter Zugriffsrechte des authentifizierten Benutzers erzeugt. Insbesondere werden demnach im Zertifikat auch die übernommene Steuerzugriffsart oder die übernommenen Steuerzugriffsarten hinterlegt, sodass dieses von der Zertifizierungsstelle erzeugte Zertifikat auch als Token bezeichnen werden kann.

Ein Zertifikat, das auch digitales Zertifikat genannt wird, ist ein digitaler Datensatz, der dient bestimmte Eigenschaften von Personen durch kryptographische Verfahren zur Autorisierung der Person zu überprüfen. In dem Zertifikat sind hier neben benutzerspezifischen Daten, wie Zugangsdaten, auch weitere Daten, wie z. B. die genannte Steuerzugriffsart, im Wesentlichen fälschungssicher hinterlegt, die von der oder den Windenergieanlagen oder dem oder den Windpark ausgelesen werden können. Das Zertifikat entspricht somit auch einer Art Token, also z. B. einem elektronischen Schlüssel, der im Wesentlichen fälschungssicher ist und auf dem neben den Daten zur Autorisierung eines Benutzers auch weitere Daten hinterlegt sind.

Im darauffolgenden Schritt erfolgt ein Authentisieren mit dem Zertifikat bei der Windenergieanlage bzw. dem Windpark zur Durchführung des oder der zuvor vom Benutzer übergebenen bzw. von der Zertifizierungsstelle übernommenen Steuerzugriffsarten. Ferner ist es gemäß einer alternativen Ausführungsform auch nötig neben dem von der Zertifizierungsstelle erzeugten Zertifikat zusätzlich Benutzerzugangsdaten, wie z. B. Benutzerkennung und Passwort, zur Authentisierung zu übergeben.

Vorteilhafterweise ist somit eine zentrale Zertifizierungsstelle vorgesehen, mit der Steuerzugriffsarten von Benutzern koordiniert werden. Ein direkter Steuerzugriff eines Benutzers auf eine Windenergieanlage oder einen Windpark ohne den Schritt über die Zertifizierungsstelle ist somit nicht möglich. Daher kann gewährleistet werden, dass in der Zertifizierungsstelle eine Koordination der erlaubten Steuerzugriffe möglich ist und somit ein Fehlverhalten und Sabotage entgegengewirkt wird. Die Zertifizierungsstelle ist demnach eingerichtet, die Zertifikatvergabe derart zu beschränken, dass von einem oder mehreren Benutzern angeforderte, also von der Zertifizierungsstelle übernommene, Steuerzugriffsarten auf mehrere Windenergieanlagen oder Windparks, die z. B. zu einer Netzstörung führen können, unterbindbar sind.

Ein Benutzer ist hier und im Folgenden eine Person, z. B. Wartungspersonal, oder aber auch ein elektronisches System eines Energieversorgungsunternehmens (EVU) oder eines Direktvermarkters. Ist der Benutzer ein elektronisches System erfolgt die Authentisierung des Benutzers automatisch z. B. durch Übergabe eines Zertifikats.

Gemäß einer Ausführungsform sind Lesezugriffe auf Windenergieanlagen und Windparks, also z. B. den Windparkregler oder Windparkkontroller, durch zertifikatsunabhängiges Authentisieren von Benutzern, insbesondere mittels eines Tupels aus Benutzerkennung und Passwort, möglich. D. h. das Zertifikat muss ein Benutzer lediglich für Steuerzugriffe auf eine Windenergieanlage und einen Windpark bei der Zertifizierungsstelle beantragen oder anfordern. Ein Lesezugriff bleibt weiter über ein direktes Authentisieren mit einem Benutzernamen und einem Passwort möglich. Ein Lesezugriff ist somit sehr einfach und schnell durch einen Benutzer realisierbar, wobei aufgrund der Tatsache, dass Lesezugriffe unkritisch sind, auf das digitale Zertifikat der Zertifizierungsstelle verzichtet werden kann.

Gemäß einer weiteren Ausführungsform wird das Zertifikat von der Zertifizierungsstelle mit einer Ausgabeschnittstelle, insbesondere an eine Recheneinheit des Benutzers, ausgegeben, sodass mit der externen Rechnereinheit, die z. B. ein mobiler Computer oder ein anderes mobiles computerähnliches Gerät ist, ein Authentisieren und Authentifizieren unabhängig von der Zertifizierungsstelle ausgeführt werden kann.

Somit ergibt sich der Vorteil, dass ohne eine Datenverbindung zur Zertifizierungsstelle ein Steuerzugriff mit der im Zertifikat enthaltenen Steuerzugriffsart ausgeführt werden kann. In entlegenen Gebieten, in denen kein Zertifikat bei der Zertifizierungsstelle beantragt werden kann, kann somit das Zertifikat "vorweg" erzeugt werden und mit dem ausgegebenen Zertifikat dann vor Ort bei der Windenergieanlage oder dem Windpark ein Steuerzugriff auch ohne eine Datenverbindung durchgeführt werden.

Gemäß einer weiteren Ausführungsform werden die Steuerzugriffe mit der Zertifizierungsstelle direkt ausgeführt. Hierzu weist die Zertifizierungsstelle z. B. eine Benutzeroberfläche oder Benutzerschnittstelle auf, mit der ein Benutzer Steuerzugriffe direkt an die Zertifizierungsstelle übergibt und diese den Benutzer dann zusammen mit dem Zertifikat bei der Windenergieanlage oder dem Windpark authentifiziert, sodass auch von der Zertifizierungsstelle entgegengenommene Steuerzugriffe des Benutzers an die Windenergieanlage oder den Windpark weitergeleitet oder verboten werden.

Gemäß dieser Ausführungsform besteht für Benutzer, die Energieversorgungsunternehmen (EVU) sind, nämlich die Möglichkeit, Windparks zu drosseln und weitere Betriebsparameter, die die Einspeisung betreffen, zu verändern, wenn dies die Netzstabilität erforderlich macht.

Nach erfolgter Authentifizierung können für einzelne Windparks Steuerzugriffe, z. B. Windparkdrosselungen, durchgeführt werden, indem durch ein EVU eine zentrale Schnittstelle des Systems, nämlich die Zertifizierungsstelle, angesprochen wird und die notwendigen Parameter des Steuerzugriffs übergeben wurden. Anschließend wird intern im Namen des EVUs ein Zertifikat für die gewünschte Aktion von der Zertifizierungsstelle erzeugt und der Steuerbefehl samt Zertifikat (Token) an den Windpark gesendet. Schließlich wird eine Rückmeldung an den EVU über den Erfolg der Aktion gegeben.

Die beschriebene Schnittstelle kann gemäß verschiedenen Ausführungsformen aus Sicherheitsgründen redundant ausgelegt sein und kann als verschiedene Protokolle, wie beispielsweise SOAP, IEC 60870-5-104, DNP3 TCP oder auch Modbus TCP ausgeführt sein.

Der Vorteil gegenüber dem Stand der Technik besteht darin, dass das EVU nicht mehr für jeden Windpark eine eigene Verbindung warten und instandhalten muss. Darüber hinaus ist es über diese Schnittstelle auch möglich, dem EVU mehr Betriebsparameter (aktuelle Sollwerte, mögl. Leistung etc.) des Windparks zur Verfügung zu stellen. Diese Art einer zentralen Steuerung wird durch die zertifikat- bzw. tokenbasierte Kommunikation zum Windpark erst ermöglicht, da auf herkömmlichem Wege die möglichen Gefahren nicht vertretbar wären.

Sind die Benutzer Direktvermarkter, so kann die Zertifizierungsstelle auch von diesen Direktvermarktern genutzt werden, um die Einspeiseleistung direkt oder indirekt, beispielsweise auf Basis von sogenannten Fahrplänen entsprechend ökonomischen Gesichtspunkten zu regulieren. Nach dem derzeitigen Stand der Technik verfügen Direktvermarkter über eine direkte Anbindung jedes einzelnen Windparks.

Das Verfahren läuft analog zu dem der EVU-Schnittstelle. Die Vorteile liegen darin, dass ein Direktvermarkter nicht mehr eine Vielzahl von Verbindungen aufbauen und pflegen muss. Darüber hinaus erhöht sich durch dieses Verfahren die Sicherheit.

Gemäß einer weiteren Ausführungsform ist in der Zertifizierungsstelle ein Steuersystem, z. B. ein dynamisches Regelwerk oder eine Steuerdatenbank, hinterlegt, in dem mehreren, insbesondere allen, registrierten Benutzern, jeweils mindestens eine erlaubte und/oder eine nicht erlaubte Steuerzugriffsart zuordenbar oder zugeordnet ist. Mit der Zertifizierungsstelle werden gemäß dieser Ausführungsform Zertifikate für authentifizierte Benutzer mit der vom Benutzer übernommenen Steuerzugriffsart nur dann erzeugt, wenn die vom Benutzer übergebene Steuerzugriffsart in dem Steuersystem für den Benutzer erlaubt ist. Das Steuersystem ist demnach eine Art Berechtigungsregelwerk, das statisch sein kann oder in Abhängigkeit verschiedener Faktoren dynamisch verändert wird.

Demnach lassen sich verschiedenen Benutzern verschiedener Windparks verschiedene Steuerzugriffsarten zentral in der Zertifizierungsstelle zuordnen, sodass Zugriffsrechte zentral für eine Vielzahl von Windparks bzw. Windenergieanlagen verwaltet werden können.

Gemäß einer weiteren Ausführungsform weist jedes der von der Zertifizierungsstelle erzeugten Zertifikate eine Gültigkeitsdauer, der auch Zeitstempel genannt wird, auf. Somit verliert ein elektronisches Zertifikat nach einer vorgesehenen Gültigkeitsdauer die Berechtigung, um einen Benutzer für einen Steuerzugriff bei einer Windenergieanlage oder einem Windpark zu authentifizieren.

Eine Gültigkeitsdauer ist z. B. in der Steuerdatenbank für jeden Benutzer und/oder jede Steuerzugriffsart individuell hinterlegt oder es ist eine allgemeine Gültigkeitsdauer für alle Zertifikate in der Zertifizierungsstelle vorgesehen, mit der die Zertifikate erzeugt werden.

Hierdurch wird die Koordination der zurzeit von der Zertifizierungsstelle vergebenen Steuerzugriffsarten erleichtert, da in der Zertifizierungsstelle die Gültigkeitsdauern der aktuell ausgegebenen Zertifikate hinterlegt werden können. Die Zertifizierungsstelle hat somit immer die Kenntnis, welche und wie viele Steuerzugriffsarten zurzeit möglich sind. Ein Zertifikat muss demnach nicht von einem Benutzer nach dessen Gebrauch an die Zertifizierungsstelle zurückgegeben werden, sondern läuft "von selbst" ab.

Gemäß einer weiteren Ausführungsform ist in dem Steuersystem für jede und/oder alle Steuerzugriffsarten eine maximale Gesamtanzahl oder eine maximale Anzahl pro vordefinierter Region hinterlegt. Zertifikate werden für eine Steuerzugriffsart nur so häufig erzeugt oder vergeben, solange die Anzahl bzw. die Gesamtanzahl der vergebenen Zertifikate, die aufgrund ihrer Gültigkeitsdauer zurzeit gültig sind, unterhalb der maximalen Gesamtanzahl oder der maximalen Anzahl für die jeweilige Region liegen.

Somit ist sichergestellt, dass für Steuerzugriffsarten und insbesondere kritische Steuerzugriffsarten, wie z. B. das Abschalten von Windenergieanlagen, nur so viele Zertifikate erzeugt werden, dass das Versorgungsnetz insbesondere in bestimmten Regionen stabil bleibt. Es besteht demnach nicht die Gefahr, dass so viele Steuerzugriffe mit einer kritischen Steuerzugriffsart in einer Region oder insgesamt erlaubt werden, um einen Zusammenbruch des Versorgungsnetzes zu provozieren.

Gemäß einer weiteren Ausführungsform wird das Zertifikat von der Zertifizierungsstelle zusätzlich in Abhängigkeit mindestens eines ermittelten aktuellen oder prognostizierten Parameters, insbesondere eines Netzzustandsparameters, des Wetters und/oder des Zustands der oder weiterer Windenergieanlagen, erzeugt. Demnach ist z. B. die maximale Gesamtanzahl oder die maximale Anzahl pro vordefinierter Region in Abhängigkeit eines Netzparameters, wie z. B. eines Netzzustandsparameters, anpassbar. In Regionen, in denen z. B. ein schwaches Netz durch den ermittelten aktuellen Parameter festgestellt wird, darf somit keine oder es dürfen nur sehr wenige Windenergieanlagen vollkommen abgeschaltet oder in Bezug auf die eingespeiste Energie reduziert werden. Somit wird von der Zertifizierungsstelle für diese Region die Anzahl der Steuerzugriffsarten limitiert bzw. begrenzt.

Demnach wird das Steuersystem also z. B. durch externe Parameter dynamisch angepasst.

Ferner umfasst die Erfindung eine Schnittstelle für mindestens eine Windenergieanlage, also eine oder mehrere Windenergieanlagen, insbesondere eines Windparks. Die Schnittstelle ist eingerichtet, ein elektronisches digitales Zertifikat, das von einer Zertifizierungsstelle erzeugt wurde, entgegenzunehmen und in Abhängigkeit des elektronischen Zertifikats, insbesondere der im Zertifikat hinterlegten Informationen, Steuerzugriffe der Steuerzugriffsart oder Steuerzugriffsarten, die im Zertifikat hinterlegt ist bzw. sind, zu erlauben. Steuerzugriffe auf eine Windenergieanlage oder einen Windpark sind somit nur durch ein zuvor erzeugtes Zertifikat, das von der Zertifizierungsstelle erzeugt wurde, möglich.

Gemäß einer Ausführungsform ist die Schnittstelle der Windenergieanlage oder des Windparks ferner eingerichtet, eine Gültigkeitsdauer, die im Zertifikat hinterlegt ist, auszulesen und Steuerzugriffe nur im Fall einer gültigen Gültigkeitsdauer zu erlauben.

Durch Prüfen einer Gültigkeitsdauer des Zertifikats ist es somit möglich, bereits abgelaufene Zertifikate derart einzuordnen, dass es einem Benutzer bei Benutzen eines derartigen Zertifikats nicht erlaubt wird, einen Steuerzugriff auszuführen.

Gemäß einer weiteren Ausführungsform ist die Schnittstelle der Windenergieanlage oder des Windparks eingerichtet, eine Anlagenkennung, die im Zertifikat hinterlegt ist, auszulesen und Steuerzugriffe nur im Fall einer Anlagenkennung zu erlauben, die der Anlagenkennung der Windenergieanlage entspricht, auf die zugegriffen werden soll.

Durch Prüfen einer Anlagenkennung des Zertifikats ist es somit möglich, dass es einem Benutzer nur erlaubt wird, auf von der Zertifizierungsstelle freigegebene Windenergieanlagen zuzugreifen.

Ferner umfasst die Erfindung eine Zertifizierungsstelle zum Authentifizieren von Benutzern für Steuerzugriffe auf mindestens eine Windenergieanlage. Die Zertifizierungsstelle weist eine Schnittstelle zum Authentisieren und Authentifizieren von Benutzern bei bzw. mit der Zertifizierungsstelle auf, wobei die Schnittstelle ferner eingerichtet ist, eine Steuerzugriffsart an die Zertifizierungsstelle vom Benutzer zu übernehmen.

Zudem ist die Zertifizierungsstelle eingerichtet, ein elektronisches digitales Zertifikat in Abhängigkeit der übergebenen Steuerzugriffsart, also der von der Zertifizierungsstelle übernommenen Steuerzugriffsart, und/oder hinterlegter Zugriffsrechte des authentifizierten Benutzers zu erzeugen. Ferner dient die Schnittstelle auch zur Ausgabe des erzeugten Zertifikats.

Mittels der Zertifizierungsstelle ist somit eine zentrale Vergabe der Zugriffsrechte der Steuerzugriffe auf eine Vielzahl von Windenergieanlagen oder Windparks möglich, sodass kritische Steuerzugriffsarten kontrollierbar sind.

Gemäß einer Ausführungsform ist die Zertifizierungsstelle eingerichtet, das Zertifikat mit einer Gültigkeitsdauer und/oder einer oder mehreren Anlagenkennungen zu erzeugen, wobei die Gültigkeitsdauer und/oder die Anlagenkennung bzw. Anlagenkennungen im Zertifikat hinterlegt ist bzw. sind.

Einem Benutzer wird demnach mit dem Zertifikat nur erlaubt, auf von der Zertifizierungsstelle freigegebene Windenergieanlagen mit entsprechender Anlagenkennungen und/oder für einen durch die Gültigkeitsdauer vorgegebenen Zeitraum Steuerzugriffe mit der im Zertifikat hinterlegten Steuerzugriffsart auszuführen.

Gemäß einer weiteren Ausführungsform umfasst die Zertifizierungsstelle ein Steuersystem, wobei mit dem Steuersystem mindestens einem, mehreren oder allen registrierten Benutzern jeweils mindestens eine erlaubte und/oder nicht erlaubte Steuerzugriffsart zuordenbar oder zugeordnet ist. Die Zertifizierungsstelle ist eingerichtet, elektronische, also digitale, Zertifikate für zuvor authentifizierte Benutzer zu erzeugen, wenn die vom jeweiligen Benutzer übergebene Steuerzugriffsart in der Steuerdatenbank als erlaubt zugeordnet ist.

Eine Zugriffsrechteverwaltung kann somit in einer einzigen Steuerdatenbank in der Zertifizierungsstelle hinterlegt werden und eine zentrale Verwaltung der Benutzerrechte kann somit erfolgen.

Gemäß einer weiteren Ausführungsform ist die Zertifizierungsstelle eingerichtet, eine Gültigkeitsdauer für die Zertifikate zu vergeben, also eine Gültigkeitsdauer im Zertifikat zu hinterlegen.

Gemäß einer weiteren Ausführungsform ist in der Steuerdatenbank für jede Steuerzugriffsart eine maximale Gesamtanzahl oder eine maximale Anzahl pro vordefinierter Region hinterlegt. Die Zertifizierungsstelle ist zudem derart eingerichtet, dass Zertifikate nur für eine Steuerzugriffsart erzeugt werden, wenn die Anzahl der bereits vergebenen und zurzeit gültigen elektronischen Zertifikate mit dieser Steuerzugriffsart unterhalb der maximalen Gesamtanzahl oder der maximalen Anzahl für die Region bleibt. Somit werden also nur so viele Zertifikate für z. B. kritische Steuerzugriffsarten vergeben bzw. erzeugt, sodass ein stabiles Netz weiterhin gewährleistet wird.

Gemäß einer weiteren Ausführungsform ist die Schnittstelle der Zertifizierungsstelle eingerichtet, neben Steuerzugriffsarten auch Anlagenkennungen vom authentifizierten Benutzer zu übernehmen, wobei Anlagenkennungen eindeutige Kennung einer oder mehrerer Windenergieanlagen oder eines oder mehrerer Windparks sind.

Somit wird der Zertifizierungsstelle also über die Schnittstelle der Zertifizierungsstelle nicht nur mindestens eine Steuerzugriffsart sondern auch mindestens eine Anlagenkennung vom authentifizierten Benutzer zugeführt. Die Zertifizierungsstelle ist dann eingerichtet, das elektronische Zertifikat in Abhängigkeit der Anlagenkennung zu erzeugen. Im Zertifikat wird demnach die übergebene Anlagenkennung hinterlegt. Somit ist ein Zugriff nur auf die Windenergieanlagen oder den Windpark möglich, für die die Anlagenkennung gültig ist.

Eine Beschränkung der Steuerzugriffe auf zuvor mit der Zertifizierungsstelle festgelegte Windenergieanlagen ist somit möglich.

Gemäß einer weiteren Ausführungsform weist die Zertifizierungsstelle eine weitere Schnittstelle auf, um Parameter wie z. B. aktuelle Wetterdaten, Wetterprognosen, aktuelle Netzzustände und/oder Netzzustandsprognosen zu empfangen und die Steuerdatenbank in Abhängigkeit dieser Parameter anzupassen.

Demnach ist also ein dynamisches Steuersystem vorgesehen, das aufgrund von übernommenen Parametern, aktualisiert oder verändert wird. Insbesondere sind z. B. die maximale Gesamtanzahl oder die maximale Anzahl pro vordefinierter Region durch diese Parameter anpassbar. Demnach kann in einer Region, in der ein ohnehin schwaches Versorgungsnetz vorhanden ist, vor Steuerzugriffen, die diesen Netzzustand weiter verschlechtern würden, bewahrt werden. Hierzu würde z. B. die maximale Gesamtanzahl an Steuerzugriffsarten und eine maximale Anzahl von erlaubten Windenergieanlagen reduziert werden.

Ferner umfasst die Erfindung ein System mit einer Schnittstelle einer Windenergieanlage oder eines Windparks gemäß einer der vorgenannten Ausführungsformen und eine Zertifizierungsstelle nach einer der vorgenannten Ausführungsformen, insbesondere zur Ausführung eines Verfahrens nach einer der vorgenannten Ausführungsformen.

Die Erfindung wird durch die beigefügten Ansprüche bestimmt.

Nachstehend ist die Erfindung anhand von Ausführungsbeispielen unter Bezugnahme auf die beiliegenden Figuren näher beschrieben. Es zeigen:
- Fig. 1: eine Windenergieanlage,
- Fig. 2: einen Windpark,
- Fig. 3: ein Ausführungsbeispiel des erfindungsgemäßen Systems und
- Fig. 4: den Ablauf eines Ausführungsbeispiels der erfindungsgemäßen Vorrichtung.

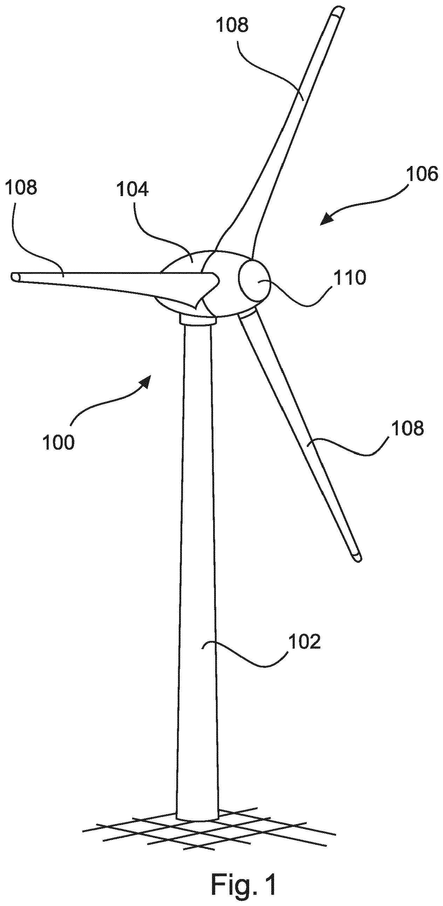

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

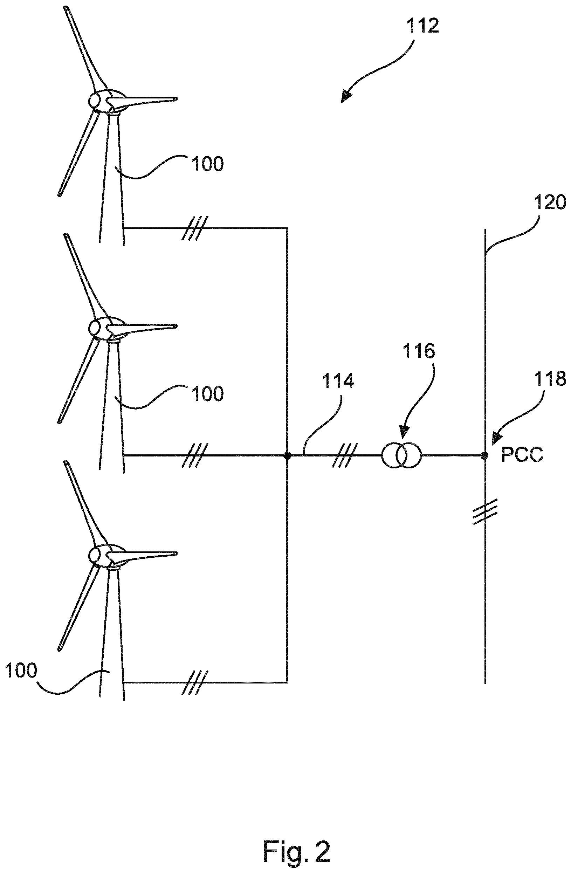

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten

Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

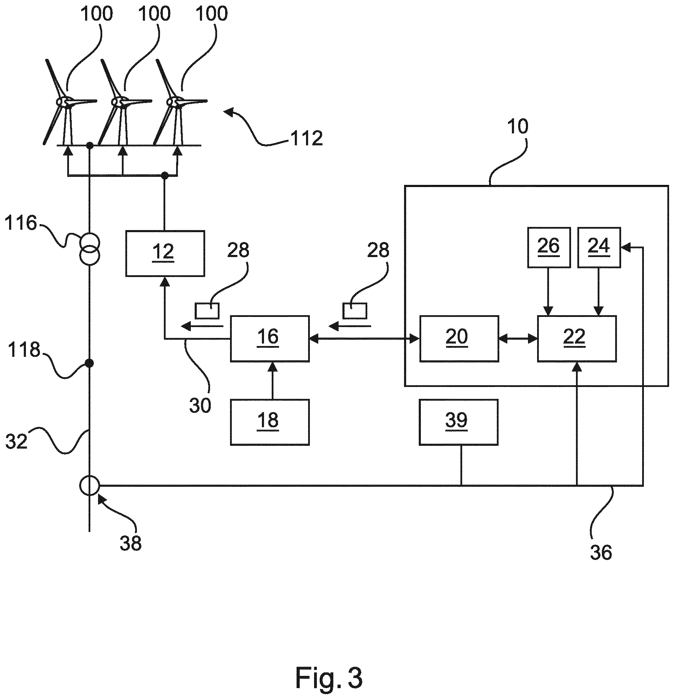

Fig. 3 zeigt ein Ausführungsbeispiel des erfindungsgemäßen Systems, das insbesondere eine Zertifizierungsstelle 10 und eine Schnittstelle 12 eines Windparks 112 aufweist. Die Schnittstelle 12 des Windparks 112 ist z. B. die Schnittstelle eines SCADA-Systems, wobei SCADA für Supervisory Control and Data Acquisition steht.

Ferner ist ein mobiles Gerät 16 eines Benutzers 18 dargestellt. Der Benutzer 18 stellt über das mobile Gerät 16 eine Verbindung mit einer Schnittstelle 20 der Zertifizierungsstelle 10 her. Zum Authentisieren des Benutzers 18 werden der Schnittstelle 20 mit dem mobilen Gerät 16 ein Benutzername und ein Passwort des Benutzers 18 übermittelt. Ferner werden der Schnittstelle 20 mithilfe des mobilen Gerätes 16 vom Benutzer 18 eine Steuerzugriffsart und eine Anlagenkennung übermittelt. Die Anlagenkennung gibt an, auf welchen Windpark der Benutzer 18 einen Steuerzugriff mit der übermittelten Steuerzugriffsart wünscht.

Die Schnittstelle 20 übermittelt die übergebenen Daten an einen Prozessor 22, der zunächst mit einem Steuersystem 24 prüft, ob der authentifizierte Benutzer 18 berechtigt ist, die angeforderte Steuerzugriffsart auf dem durch die Anlagenkennung angegebenen Windpark auszuführen.

Ferner überprüft der Prozessor 22 mit dem Steuersystem 24, ob eine maximale Anzahl an Steuerzugriffen der angeforderten Steuerzugriffsart bereits überschritten ist. Ist diese Anzahl nicht überschritten, so erzeugt der Prozessor 22 ein Zertifikat. Das Zertifikat erhält eine Gültigkeitsdauer, die mittels einer Datums- und Uhrzeitquelle 26 erstellt wird. Wobei das Datums- und Uhrzeitsignal z. B. aus einem GPS-Signal ermittelt und an den Prozessor übermittelt wird. Im Prozessor 22 wird dann für einen, insbesondere durch das Steuersystem 24 vordefinierten, Zeitraum die Gültigkeitsdauer im Zertifikat hinterlegt. Beispiele für Gültigkeitsdauern sind z. B. zwei Stunden, acht Stunden, ein Tag oder fünf Tage.

Das Zertifikat, das vom Prozessor 22 erzeugt wurde, enthält außerdem die der Schnittstelle 20 vom Benutzer 18 mit dem mobilen Gerät 16 übergebene Steuerzugriffsart, die Anlagenkennung sowie weitere kryptografische Parameter zur Echtheitsprüfung des Zertifikats.

Das Zertifikat 28 wird über die Schnittstelle 20 an das mobile Gerät 16 übertragen. Über eine weitere Datenverbindung 30 zwischen dem mobilen Gerät 16 und der Schnittstelle 12 des Windparks 112 kann der Benutzer 18 durch Eingabe seines Benutzernamens und seines Passworts einen Lesezugriff auf den Windpark 112 einleiten und Daten des Windparks 112 auslesen. Will der Benutzer jedoch einen Schreibzugriff, der hier dem Steuerzugriff entspricht, auf den Windpark 112 ausüben, so wird das Zertifikat 28 über die weitere Datenverbindung 30 an die Schnittstelle 12 des Windparks 112 übergeben. Im Windpark 112 bzw. einer hier nicht dargestellten Steuerung des Windparks 112 wird dann das Zertifikat, das über die Schnittstelle 12 des Windparks 112 eingelesen wurde, auf Echtheit geprüft.

Ferner wird mit der Schnittstelle 12 des Windparks geprüft, ob das Zertifikat 28 noch gültig ist, also die Gültigkeitsdauer noch nicht abgelaufen ist, und ob die im Zertifikat hinterlegte Anlagenkennung mit der Anlagenkennung des Windparks übereinstimmt. Im Falle einer gültigen Gültigkeitsdauer, einer übereinstimmenden Anlagenkennung sowie eines echten Zertifikats werden dann dem Benutzer 18 Steuerzugriffe auf den Windpark 112 erlaubt, die die im Zertifikat 28 hinterlegten Steuerzugriffsarten betreffen. Somit kann durch den Benutzer 18 über das mobile Gerät 16 ein Steuerzugriff auf den Windpark 112 erfolgen.

Im Falle, dass das Versorgungsnetz 32, an das der Windpark 112 über einen Transformator 116 und einen Einspeisepunkt 118 angeschlossen ist, schwach oder instabil ist, da z. B. alle an dieses Netz angeschlossenen elektrischen Energieerzeuger zurzeit nur wenig Energie in das Netz einspeisen, wird dies durch die Zertifizierungsstelle 10 durch von außen zugeführte Parameter 36 detektiert. Ein Parameter 36 kann z. B. durch eine Netz- oder Frequenzmessung 38 des Versorgungsnetzes 32, an das der Windpark 112 angeschlossen ist, ermittelt werden.

Ferner ist eine Wetterdatenbank 39 vorgesehen, aus der aktuelle und prognostizierte Wetterdaten an die Zertifizierungsstelle übergeben bzw. von der Zertifizierungsstelle abgerufen werden. Gemäß anderer Ausführungsbeispiele ist die Wetterdatenbank 39 ein komplettes Meteosystem zur Wetteraufzeichnung und Prognose.

Wird nun von einem Benutzer 18 eine Steuerzugriffsart, die für das Versorgungsnetz 32 kritisch sein könnte, an die Schnittstelle 20 für die Zertifikaterstellung im Prozessor 22 übergeben, so wird eine derartige kritische Steuerzugriffsart verboten, da die Steuerdatenbank 24 zuvor durch den Parameter 32 dynamisch aktualisiert wurde und damit kritische Steuerzugriffsarten, die Windparks 112 in der Region des Versorgungsnetzes 32 betreffen, grundsätzlich als verboten gekennzeichnet sind.

Im zuletzt genannten Fall wird das Zertifikat 28 demnach nicht von der Schnittstelle 20 an das mobile Gerät 16 ausgegeben. Stattdessen wird von der Schnittstelle 20 eine Nachricht an das mobile Gerät 16 ausgegeben, das zurzeit eine derartige Steuerzugriffsart nicht möglich ist.

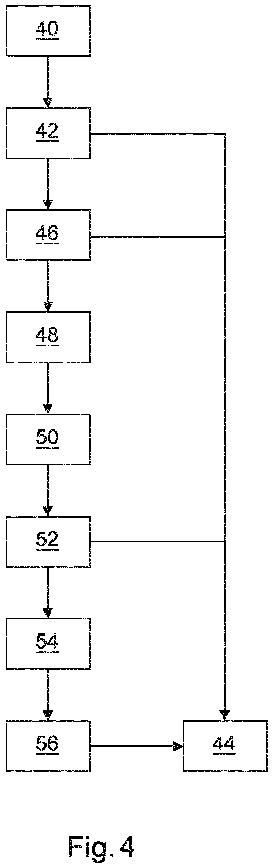

Fig. 4 zeigt den Ablauf eines Ausführungsbeispiels des Verfahrens. Im ersten Schritt 40 werden einer Schnittstelle 20 einer Zertifizierungsstelle 10 ein Passwort, ein Benutzername, eine gewünschte Steuerzugriffsart sowie eine Anlagenkennung übergeben. Im nächsten Schritt 42 wird der Benutzer, wenn er in der Zertifizierungsstelle 10 registriert ist und das Passwort sowie der Benutzername korrekt sind, authentifiziert und somit für die weitere Kommunikation mit der Zertifizierungsstelle 10 autorisiert. Wurde ein falscher Benutzername oder ein falsches Passwort eingegeben, so endet der Zugriff im Schritt 44.

Stimmen Benutzername und Passwort mit hinterlegten Daten im Steuersystem 24, so wird in einem nächsten Schritt 46 geprüft, ob die Steuerzugriffsart für den authentifizierten Benutzer auf die Windenergieanlage 100 mit der übergebenen Anlagenkennung erlaubt ist. Ist die Steuerzugriffsart für den Benutzer nicht erlaubt, so endet das Verfahren erneut im Schritt 44. Ist die Steuerzugriffsart sowie die gewählte Windenergieanlage 100 für den Benutzer erlaubt, so wird in einem nächsten Schritt 46 in der Zertifizierungsstelle geprüft, ob aufgrund der Anzahl der zurzeit gültigen angeforderten Steuerzugriffe auf Windparks in derselben Region die angeforderte Steuerzugriffsart erlaubt ist. Ist diese Steuerzugriffsart nicht erlaubt, so endet das Verfahren wieder im Schritt 44.

Ist die Steuerzugriffsart zurzeit erlaubt, so wird ein Zertifikat 28 in einem Schritt 48 erstellt, wobei das Zertifikat 28 den Benutzernamen, die Anlagenkennung, die Steuerzugriffsart sowie einen Zeitstempel bzw. eine Gültigkeitsdauer aufweist. Das Zertifikat 28 wird dann in einem Schritt 50 an ein mobiles Gerät 16 des Benutzers 18 ausgegeben.

Im darauffolgenden Schritt 52 authentisiert sich der Benutzer mit dem mobilen Gerät 16 bei einer Windenergieanlage 100, wobei hierfür erneut ein Passwort und ein Benutzername über eine Schnittstelle 12 einer Windenergieanlage 100 eingegeben werden. Stimmen der übergebene Benutzername und das übergebene Passwort mit dem in der Windenergieanlage hinterlegten Benutzernamen und Passwort überein, so ist der Benutzer 18 für Lesezugriffe autorisiert. Anderenfalls endet das Verfahren wieder im Schritt 44.

Nach erfolgreicher Autorisierung des Benutzers 18 für Lesezugriffe, wird im Schritt 54 das Zertifikat 28 vom mobilen Gerät 16 an die Schnittstelle 12 der Windenergieanlage 100 übergeben und es findet eine Autorisierung des Benutzers für die im Zertifikat hinterlegten Steuerzugriffe statt, wenn die Anlagenkennung im Zertifikat mit der Anlagenkennung der Windenergieanlage 100 übereinstimmt und die Gültigkeitsdauer noch nicht abgelaufen ist.

Im Schritt 56 werden dem Benutzer dann Steuerzugriffe gemäß dem oder den im Zertifikat 28 hinterlegten Steuerzugriffsarten erlaubt und eine Steuerung durch den Benutzer 18 kann erfolgen. Nachdem die Steuerzugriffe ausgeführt wurden, endet das Verfahren im Schritt 44.

## Patentansprüche

1. Verfahren zum Autorisieren von Benutzern (18) für Steuerzugriffe auf mindestens eine Windenergieanlage (100) oder mindestens einen Windpark, umfassend die Schritte:
- Authentisieren und Authentifizieren eines Benutzers (18) durch eine Zertifizierungsstelle (10),
- Übernehmen mindestens einer Steuerzugriffsart durch die Zertifizierungsstelle (10) vom authentifizierten Benutzer (18),
- Erzeugen eines elektronischen Zertifikats (28) mit der Steuerzugriffsart mittels der Zertifizierungsstelle (10) in Abhängigkeit der übernommenen Steuerzugriffsart und/oder in Abhängigkeit hinterlegter Zugriffsrechte des authentifizierten Benutzers (18) zur Authentisierung von Steuerzugriffen mit der Steuerzugriffsart an der mindestens einen Windenergieanlage oder dem mindestens einen Windpark und
- Authentisieren bei der mindestens einen Windenergieanlage (100) oder dem mindestens einen Windpark mit dem Zertifikat (28) zur Durchführung von Steuerzugriffen mit der Steuerzugriffsart,
wobei
a) das Zertifikat (28) mit einer Gültigkeitsdauer erzeugt wird und
mit einem Steuersystem (24) für jede Steuerzugriffsart eine maximale Gesamtanzahl hinterlegt wird und
Zertifikate (28) nur für eine Steuerzugriffsart erzeugt werden, wenn die Anzahl der bereits vergebenen Zertifikate (28), die aufgrund ihrer Gültigkeitsdauer zurzeit gültig sind, unterhalb der maximalen Gesamtanzahl liegt oder
b) das Zertifikat (28) mit einer Gültigkeitsdauer erzeugt wird und
mit dem Steuersystem (24) für jede Steuerzugriffsart eine maximale Anzahl pro vordefinierter Region hinterlegt wird und
Zertifikate (28) nur für eine Steuerzugriffsart erzeugt werden, wenn die Anzahl der bereits für die Region vergebenen Zertifikate (28), die aufgrund ihrer Gültigkeitsdauer zurzeit gültig sind, unterhalb der maximalen Anzahl pro vordefinierter Region liegt.

2. Verfahren nach Anspruch 1, wobei die Zertifizierungsstelle (10) ein Zertifikat (28) zusätzlich in Abhängigkeit mindestens eines ermittelten aktuellen oder prognostizierten Parameters (32), umfassend einen Netzzustand, das Wetter oder den Zustand einer oder mehrerer Windenergieanlagen, erzeugt.

3. Verfahren nach Anspruch 1 oder 2, wobei ein Autorisieren für einen Lesezugriff eines Benutzers (18) durch zertifikatunabhängiges Authentisieren eines Benutzers (18) bei einer Schnittstelle (12) einer Windenergieanlage (100) oder einem Windpark erfolgt.

4. Verfahren nach einem der vorhergehenden Ansprüche, wobei das Zertifikat (28) von der Zertifizierungsstelle (10) mit einer Schnittstelle (20) an eine Rechnereinheit (16) ausgegeben wird und mit der Rechnereinheit (16) das Authentisieren bei der Schnittstelle (12) der Windenergieanlage (100) oder dem Windpark sowie Steuerzugriffe auf die Windenergieanlage (100) oder den Windpark unabhängig von der Zertifizierungsstelle (10) ausgeführt werden.

5. Verfahren nach einem der vorhergehenden Ansprüche, wobei mit der Zertifizierungsstelle (10) das Authentisieren bei der Schnittstelle (12) der Windenergieanlage (100) oder dem Windpark sowie Steuerzugriffe auf die Windenergieanlage (100) oder den Windpark ausgeführt werden.

6. Verfahren nach einem der vorhergehenden Ansprüche, wobei
die Zertifizierungsstelle (10) ein Steuersystem (24) aufweist, mit dem einem, mehreren oder allen registrierten Benutzern (18) jeweils mindestens eine erlaubte und/oder nicht erlaubte Steuerzugriffsart zugeordnet ist und
mit der Zertifizierungsstelle (10) Zertifikate (28) eines authentifizierten Benutzers (18) mit der übernommenen Steuerzugriffsart ausschließlich im Fall erzeugt werden, dass die übernommene Steuerzugriffsart für den Benutzer als erlaubt im Steuersystem (24) zugeordnet ist.

7. Zertifizierungsstelle zum Autorisieren von Benutzern für Steuerzugriffe auf mindestens eine Windenergieanlage oder mindestens einen Windpark, umfassend:
- eine Schnittstelle (20) zum Authentisieren und Authentifizieren eines Benutzers (18) bei der Zertifizierungsstelle (10) und zum Übergeben mindestens einer Steuerzugriffsart an die Zertifizierungsstelle (10) vom authentifizierten Benutzer (18),
- wobei die Zertifizierungsstelle (10) eingerichtet ist, ein Zertifikat (28) mit der Steuerzugriffsart in Abhängigkeit der Steuerzugriffsart und/oder in Abhängigkeit hinterlegter Zugriffsrechte des authentifizierten Benutzers (18) zur Authentisierung von Steuerzugriffen mit der Steuerzugriffsart an der mindestens einen Windenergieanlage oder dem mindestens einen Windpark zu erzeugen und
- wobei die Schnittstelle (20) eingerichtet ist, das elektronische Zertifikat (28) auszugeben,
wobei
a) die Zertifizierungsstelle (10) eingerichtet ist, eine Gültigkeitsdauer für die Zertifikate (28) zu vergeben und
in einem Steuersystem (24) für jede Steuerzugriffsart eine maximale Gesamtanzahl hinterlegt ist und
die Zertifizierungsstelle (10) eingerichtet ist, Zertifikate (28) nur für eine Steuerzugriffsart zu erzeugen, wenn die Anzahl der vergebenen Zertifikate (28) dieser Steuerzugriffsart, die zurzeit gültig sind, unterhalb der maximalen Gesamtanzahl liegt oder
b) die Zertifizierungsstelle (10) eingerichtet ist, eine Gültigkeitsdauer für die Zertifikate (28) zu vergeben und
in dem Steuersystem (24) für jede Steuerzugriffsart eine maximale Anzahl pro vordefinierter Region hinterlegt ist und
die Zertifizierungsstelle (10) eingerichtet ist, Zertifikate (28) nur für eine Steuerzugriffsart zu erzeugen, wenn die Anzahl der vergebenen Zertifikate (28) dieser Steuerzugriffsart, die zurzeit für die Region gültig sind, unterhalb der maximalen Anzahl der Region liegt.

8. Zertifizierungsstelle nach Anspruch 7, wobei die Zertifizierungsstelle (10) eine weitere Schnittstelle aufweist, um Parameter (36), umfassend aktuelle Wetterdaten sowie Wetterprognosen oder aktuelle Netzzustände und Netzzustandsprognosen, zu empfangen und das Steuersystem (24) in Abhängigkeit dieser Parameter (36) anzupassen.

9. Zertifizierungsstelle nach Anspruch 7 oder 8, wobei
die Zertifizierungsstelle (10) das Steuersystem (24) umfasst und mit dem Steuersystem (24) einem, mehreren oder allen registrierten Benutzern (18) jeweils mindestens eine erlaubte und/oder nicht erlaubte Steuerzugriffsart zugeordnet ist und
die Zertifizierungsstelle (10) eingerichtet ist, Zertifikate (28) eines authentifizierten Benutzers (18) zu erzeugen im Falle, dass die vom Benutzer (18) übergebene Steuerzugriffsart in dem Steuersystem (24) als erlaubt für den Benutzer (18) zugeordnet ist.

10. Zertifizierungsstelle nach einem der Ansprüche 7 bis 9, wobei
die Schnittstelle (20) der Zertifizierungsstelle (10) eingerichtet ist, neben der Steuerzugriffsart mindestens eine Anlagenkennung mindestens einer zu steuernden Windenergieanlage (100) oder mindestens eines zu steuernden Windparks mittels der Schnittstelle (20) zu übernehmen und
die Zertifizierungsstelle (10) eingerichtet ist, das elektronische Zertifikat (28) mit der Zertifizierungsstelle (10) in Abhängigkeit der Steuerzugriffsart und der Anlagenkennung und/oder hinterlegter Zugriffsrechte des authentifizierten Benutzers (18) zu erzeugen.

11. System mit einer Schnittstelle für mindestens eine Windenergieanlage (100) oder mindestens einen Windpark, wobei
die Schnittstelle (12) eingerichtet ist, ein Zertifikat (28) entgegenzunehmen und in Abhängigkeit des Zertifikats (28) mindestens einen Steuerzugriff einer Steuerzugriffsart zu erlauben oder
die Schnittstelle (12) eingerichtet ist, eine im Zertifikat (28) hinterlegte Steuerzugriffsart des Zertifikats (28) auszulesen und nur Steuerzugriffe mit der hinterlegten Steuerzugriffsart zu erlauben und
einer Zertifizierungsstelle nach einem der Ansprüche 7 bis 10.

## Claims

1. Method for authorizing users (18) for control accesses to at least one wind turbine (100) or at least one wind farm, comprising the steps:
- a certification centre (10) authenticating and authentifying a user (18),
- the certification centre (10) accepting at least one control-access type from the authenticated user (18),
- the certification centre (10) generating an electronic certificate (28) containing the control-access type according to the accepted control-access type and/or according to stored access permissions of the authenticated user (18) for authentification of control access containing the control-access type at the wind turbine or the wind farm, and
- using the certificate (28) for authentication with the at least one wind turbine (100) or with the at least one wind farm for the purpose of performing control accesses having the control-access type wherein
a) the certificate (28) containing a validity period is generated and
the control system (24) is used to store for each control-access type a maximum total number and
certificates (28) are generated for a control-access type only if the number of the certificates (28) that have already been awarded and are currently valid on the basis of their validity period lies below the maximum total number, or
b) the certificate (28) containing a validity period is generated
and the control system (24) is used to store for each control-access type a maximum number per predefined region, and
certificates (28) are generated for a control-access type only if the number of the certificates (28) that have already been awarded for the region and are currently valid on the basis of their validity period lies below the maximum number per predefined region.

2. Method according to claim 1, wherein the certification centre (10) generates a certificate (28) also according to at least one ascertained current or predicted parameter (32), according to the grid status, the weather and/or the status of one or more wind turbines.

3. Method according to Claim 1 or 2,
wherein authorization for a read access of a user (18) is performed by certificate-independent authentication of a user (18) with an interface (12) of a wind turbine (100) or with a wind farm.

4. Method according to any of the preceding claims, wherein
the certification centre (10) uses an interface (20) to issue the certificate (28) to a processing unit (16) and the processing unit (16) is used to perform the authentication with the interface (12) of the wind turbine (100) or with the wind farm and to perform control accesses to the wind turbine (100) or to the wind farm independently of the certification centre (10).

5. Method according to any of the preceding claims, wherein the certification centre (10) performs the authentication with the interface (12) of the wind turbine (100) or with the wind farm and performs control accesses to the wind turbine (100) or to the wind farm.

6. Method according to any of the preceding claims, wherein
the certification centre (10) comprises a control system (24) by means of which one registered user or each of a plurality of registered users or every registered user (18) is allocated at least one allowed and/or un-allowed control-access type, and
the certification centre (10) generates certificates (28) of an authenticated user (18) having the accepted control-access type solely if the accepted control-access type is designated in the control system (24) as allowed for the user.

7. Certification centre for authorizing users for control accesses to at least one wind turbine or to at least one wind farm, comprising:
- an interface (20) for authenticating and authentifying a user (18) with the certification centre (10) and for transferring at least one control-access type to the certification centre (10) from the authenticated user (18),
- wherein the certification centre (10) is designed to generate a certificate (28) containing the control-access type according to the control-access type and/or according to stored access permissions of the authenticated user (18) for authentification of control access containing the control-access type at the wind turbine or the wind farm, and
- wherein the interface (20) is designed to issue the electronic certificate (28),
wherein
a) the certification centre (10) is designed to allocate a validity period to the certificates (28) and
a maximum total number is stored for each control-access type in the control system (24), and
the certification centre (10) is designed to generate certificates (28) for a control-access type only if the number of the awarded certificates (28) of this control-access type that are currently valid lies below the maximum total number and
b) the certification centre (10) is designed to allocate a validity period to the certificates (28) and a maximum number per predefined region is stored for each control-access type in the control system (24), and
the certification centre (10) is designed to generate certificates (28) for a control-access type only if the number of the awarded certificates (28) of this control-access type that are currently valid for the region lies below the maximum number for the region.

8. Certification centre according to claim 7, wherein
the certification centre (10) comprises a further interface in order to receive parameters (36) comprising prevailing weather data and weather forecasts and/or current grid statuses and grid-status predictions, and to adjust the control system (24) according to these parameters (36).

9. Certification centre according to claim 7 or 8, wherein
the certification centre (10) comprises the control system (24) and by means of which control system (24) one registered user or each of a plurality of registered users or every registered user (18) is allocated at least one allowed and/or un-allowed control-access type, and
the certification centre (10) is designed to generate certificates (28) for an authenticated user (18) if the control-access type transferred by the user (18) is designated in the control system (24) as allowed for the user (18).

10. Certification centre according to one of Claims 7 to 9, wherein
the interface (20) of the certification centre (10) is designed to accept by means of the interface (20) in addition to the control-access type, at least one turbine identifier of at least one wind turbine (100) to be controlled or of at least one wind farm to be controlled, and the certification centre (10) is designed to generate the electronic certificate (28) with the certification centre (10) according to the control-access type and the turbine identifier and/or stored access permissions of the authenticated user (18).

11. System comprising an interface for at least one wind turbine (100) or at least one wind farm, wherein
the interface (12) is designed to receive a certificate (28) and to allow on the basis of the certificate (28) a control-access of a control access type or
the interface (12) is designed to read out a control-access type of the certificate (28) stored in the certificate (28) and to only allow a control access of the stored control-access type and
a certification centre according to any of claims 7 to 10.

## Revendications

1. Procédé servant à autoriser des utilisateurs (18) à accéder à des commandes d'au moins une éolienne (100) ou d'au moins un parc éolien, comprenant les étapes :
- d'identification et d'authentification d'un utilisateur (18) par un poste de certification (10),
- de prise en charge d'au moins un type d'accès de commande par le poste de certification (10) de l'utilisateur (18) authentifié,
- de production d'un certificat (28) électronique avec le type d'accès de commande au moyen du poste de certification (10) en fonction du type d'accès de commande pris en charge et/ou en fonction de droits d'accès enregistrés de l'utilisateur (18) authentifié aux fins de l'identification d'accès de commande avec le type d'accès de commande au niveau de l'au moins une éolienne ou de l'au moins un parc éolien, et
- d'identification auprès de l'au moins une éolienne (100) ou de l'au moins un parc éolien avec le certificat (28) aux fins de la mise en œuvre d'accès de commande avec le type d'accès de commande,
dans lequel
a) le certificat (28) est produit avec une durée de validité et un nombre total maximal est enregistré avec un système de commande (24) pour chaque type d'accès de commande, et
des certificats (28) sont produits pour un type d'accès de commande seulement si le nombre des certificats (28) déjà attribués, qui sont valables présentement du fait de leur durée de validité, est inférieur au nombre total maximal ou
b) le certificat (28) est produit avec une durée de validité et
un nombre maximal par région prédéfinie est enregistré avec le système de commande (24) pour chaque type d'accès de commande, et
des certificats (28) sont produits pour un type d'accès de commande seulement si le nombre des certificats (28) déjà attribués pour la région, qui sont valables présentement en raison de leur durée de validité, est inférieur au nombre maximal par région prédéfinie.

2. Procédé selon la revendication 1, dans lequel le poste de certification (10) produit de plus un certificat (28) en fonction d'au moins un paramètre (32) actuel déterminé ou prévu, comprenant un état de réseau, les conditions météorologiques ou l'état d'une ou de plusieurs éoliennes.

3. Procédé selon la revendication 1 ou 2, dans lequel une autorisation pour un accès en mode lecture d'un utilisateur (18) est effectuée par une identification d'un utilisateur (18) indépendante du certificat auprès d'une interface (12) d'une éolienne (100) ou d'un parc éolien.

4. Procédé selon l'une quelconque des revendications précédentes, dans lequel le certificat (28) est envoyé par le poste de certification (10) avec une interface (20) à une unité de calcul (16) et l'identification auprès de l'interface (12) de l'éolienne (100) ou du parc éolien ainsi que des accès de commande à l'éolienne (100) ou au parc éolien sont exécutés indépendamment du poste de certification (10) avec l'unité de calcul (16).

5. Procédé selon l'une quelconque des revendications précédentes, dans lequel l'identification auprès de l'interface (12) de l'éolienne (100) ou du parc éolien ainsi que des accès de commande à l'éolienne (100) ou au parc éolien sont exécutés avec le poste de certification (10).

6. Procédé selon l'une quelconque des revendications précédentes, dans lequel
le poste de certification (10) présente un système de commande (24), avec lequel respectivement au moins un type d'accès de commande autorisé et/ou non autorisé est associé à un, plusieurs ou tous les utilisateurs (18) inscrits et
des certificats (28) d'un utilisateur (18) authentifié avec le type d'accès de commande pris en charge sont produits avec le poste de certification (10) exclusivement dans le cas où le type d'accès de commande pris en charge pour l'utilisateur est attribué comme étant autorisé dans le système de commande (24).

7. Poste de certification servant à autoriser des utilisateurs pour des accès de commande à au moins une éolienne ou à au moins un parc éolien, comprenant :
- une interface (20) servant à identifier et authentifier un utilisateur (18) auprès du poste de certification (10) et servant à transmettre au moins un type d'accès de commande au poste de certification (10) par l'utilisateur (18) authentifié,
- dans lequel le poste de certification (10) est conçu pour produire un certificat (28) avec le type d'accès de commande en fonction du type d'accès de commande et/ou en fonction de droits d'accès enregistrés de l'utilisateur (18) authentifié aux fins de l'identification d'accès de commande avec le type d'accès de commande au niveau de l'au moins une éolienne ou de l'au moins un parc éolien, et
- dans lequel l'interface (20) est conçue pour envoyer le certificat (28) électronique,
dans lequel
a) le poste de certification (10) est conçu pour attribuer une durée de validité pour les certificats (28) et
un nombre total maximal est enregistré dans un système de commande (24) pour chaque type d'accès de commande, et
le poste de certification (10) est conçu pour produire des certificats (28) pour un type d'accès de commande seulement si le nombre des certificats (28) attribués dudit type d'accès de commande, qui sont présentement valables, est inférieur au nombre total maximal ou
b) le poste de certification (10) est conçu pour attribuer une durée de validité pour les certificats (28) et
un nombre maximal par région prédéfinie est enregistré dans le système de commande (24) pour chaque type d'accès de commande, et
le poste de certification (10) est conçu pour produire des certificats (28) pour un type d'accès de commande seulement si le nombre des certificats (28) attribués dudit type d'accès de commande, qui sont présentement valables pour la région, est inférieur au nombre maximal de la région.

8. Poste de certification selon la revendication 7, dans lequel le poste de certification (10) présente une autre interface pour recevoir des paramètres (36) comprenant des données météorologiques actuelles ainsi que des prévisions météorologiques ou des états de réseau actuels et des prévisions d'état de réseau et adapter le système de commande (24) en fonction desdits paramètres (36).

9. Poste de certification selon la revendication 7 ou 8, dans lequel
le poste de certification (10) comprend le système de commande (24) et respectivement au moins un type d'accès de commande autorisé et/ou non autorisé est associé à un, plusieurs ou tous les utilisateurs (18) inscrits avec le système de commande (24), et
le poste de certification (10) est conçu pour produire des certificats (28) d'un utilisateur (18) authentifié dans le cas où le type d'accès de commande transmis par l'utilisateur (18) est associé dans le système de commande (24) comme étant autorisé pour l'utilisateur (18).

10. Poste de certification selon l'une quelconque des revendications 7 à 9, dans lequel
l'interface (20) du poste de certification (10) est conçue pour prendre en charge outre le type d'accès de commande au moins un code d'installation d'au moins une éolienne (100) à commander ou d'au moins un parc éolien à commander au moyen de l'interface (20) et
le poste de certification (10) est conçu pour produire le certificat (28) électronique avec le poste de certification (10) en fonction du type d'accès de commande et du code d'installation et/ou des droits d'accès enregistrés de l'utilisateur (18) authentifié.

11. Système avec une interface pour au moins une éolienne (100) ou au moins un parc éolien, dans lequel
l'interface (12) est conçue pour réceptionner un certificat (28) et pour autoriser en fonction du certificat (28) au moins un accès de commande d'un type d'accès de commande ou
l'interface (12) est conçue pour lire un type d'accès de commande enregistré dans le certificat (28) et n'autoriser que des accès de commande avec le type d'accès de commande enregistré, et
un poste de certification selon l'une quelconque des revendications 7 à 10.
